# EUROPEAN PATENT SPECIFICATION

(11) **EP 3 267 548 B1**
(45) Date of publication and mention of the grant of the patent: **11.09.2019**
(21) Application number: 17179504.0
(22) Date of filing: 04.07.2017
(51) Int. Cl.: H02J 3/38, H02J 3/48

(54) **WIND POWER GENERATING EQUIPMENT, OPERATION METHOD THEREOF, AND WIND FARM**
WINDENERGIEERZEUGUNGSAUSRÜSTUNG, BETRIEBSVERFAHREN DAFÜR UND WINDENERGIEPARK
ÉQUIPEMENT DE GÉNÉRATION D'ÉNERGIE ÉOLIENNE, SON PROCÉDÉ DE FONCTIONNEMENT ET PARC ÉOLIEN

(30) Priority: 05.07.2016 JP 2016133235
(43) Date of publication of application: 10.01.2018
(73) Proprietor: Hitachi, Ltd., Tokyo 100-8280 (JP)
(72) Inventor: ITOH, Yuta, Tokyo, 100-8280 (JP); SAKAMOTO, Kiyoshi, Tokyo, 100-8280 (JP); MEGURO, Hikaru, Tokyo, 100-8280 (JP); FUJII, Tomohiro, Tokyo, 100-8280 (JP)
(74) Representative: MERH-IP Matias Erny Reichl Hoffmann Patentanwälte PartG mbB

(56) References cited:
- EP-A2- 1 919 076
- US-A1- 2008 001 411
- US-A1- 2009 250 931
- US-A1- 2011 089 694

## Description

### Technical Field

The present invention relates to wind power generating equipment, operation method of the wind power generating equipment, and a wind farm, particularly, to wind power generating equipment, operation method thereof, and a wind farm which are suitable during voltage reduction and power return of an interconnected system.

### Background Art

Wind power generating equipment is an environment-friendly power generation method without emission of dioxide and thus, recently, the wind power generating equipment has been introduced. However, when a system voltage is instantaneously reduced due to a lightning strike or the like, a phenomenon of collective cutoff of the wind power generating equipment from a system occurred in the past. Therefore, it is mandatory for the wind power generating equipment to have a fault ride through (FRT) function of continuing an operation even when instantaneous voltage reduction occurs during an occurrence of system abnormality.

PTL 1 discloses, as a control method employed when system voltage reduction occurs, a wind power generating power conversion system that controls power consumed by a chopper and a resistor in a power conversion system and torque of a generator, by using output power and a rotation speed of the generator, a frequency of FRT, a torque command value as an output from a generator control system as a high-order system of the power conversion system. PTL2 describes a variable speed wind power generation system including a wind turbine, generation power command means for generating a generation power command value based on a state quantity of the wind turbine and generator control means for controlling the power converter for controlling electric power of the generator, wherein the generator control means operates to regulate the generation power of the generator in order to change the generation power amount according to the generation power command value.

### Citation List

### Patent Literature

PTL 1: JP-A-2015-023616
PTL 2: US 2008/001411 A1

### Summary of Invention

### Technical Problem

However, a technology disclosed in PTL 1 has a problem in that, since the power conversion system operates by receiving the torque command value from the generator control system as the high-order system even when instantaneous reduction occurs in the system voltage, delay occurs in data communication, and thus a response to an abrupt transient phenomenon such as the instantaneous voltage reduction is delayed. The instantaneous voltage reduction during an occurrence of system abnormality is a phenomenon of the order of several milliseconds. Therefore, in a case where there is no immediate response due to long control delay, a phenomenon of causing damage to smoothing capacitor due to an increase in a DC voltage inside the power conversion system or causing a significant increase occurs in rotation speed of the wind power generator, and thus the wind power generating equipment stops operating.

An object of the invention is to provide wind power generating equipment, an operation method of the wind power generating equipment, and a wind farm, which are capable of reducing control delay due to data communication between a power conversion system and a wind turbine control board as a high-order system thereof and stably continuing an operation of a wind power generating system when instantaneous voltage reduction occurs during an occurrence of system abnormality.

### Solution to Problem

The above is solved by the claimed subject matter of the appended claims. In particular, there is provided a wind power generating equipment according to claims 1 to 5.

In addition, there is provided an operation method of wind power generating equipment according to claims 6 to 8.

In addition, there is provided a wind farm according to claim 9.

### Advantageous Effects of Invention

According to the invention, even when instantaneous voltage reduction occurs during an occurrence of system abnormality, it is possible to control the power of the wind power generating equipment in a highly responsive manner, and it is possible to stably continue an operation of a wind power generating system.

### Brief Description of Drawings

Fig. 1 is a diagram illustrating a configuration of wind power generating equipment according to Example 1 of the invention.
Fig. 2 is a diagram illustrating a level of an active power command value of the wind power generating equipment before and after an occurrence of system voltage reduction.
Fig. 3 is a diagram illustrating a circuit configuration of a wind turbine control board 15.
Fig. 4 is a diagram illustrating a configuration of wind power generating equipment according to Example 2 of the invention.

### Description of Embodiments

Hereinafter, Examples of the invention will be described with reference to the figures.

### [Example 1]

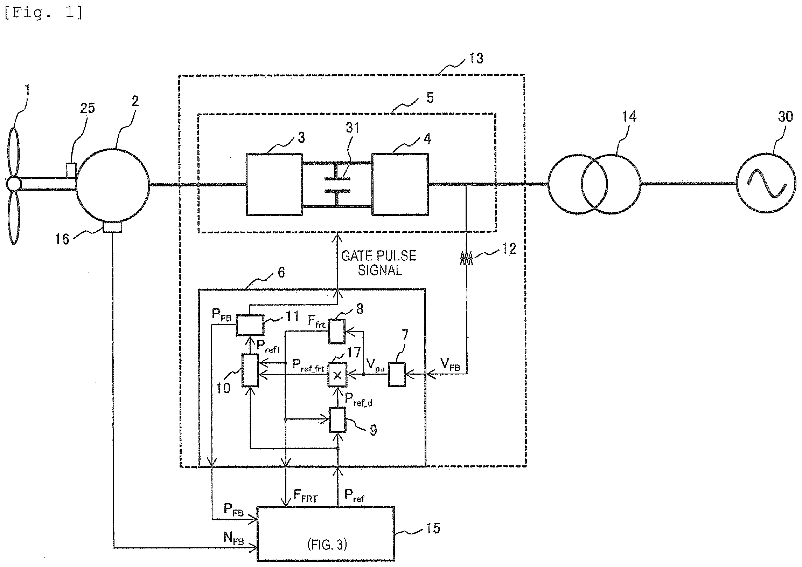

Fig. 1 is a diagram illustrating a configuration of wind power generating equipment according to Example 1 of the invention. In Fig. 1, a main body of the wind power generating equipment is configured to include a blade 1, a generator 2, and a power conversion system 13. In addition, an output of the generator 2 is interconnected from the power conversion system 13 via a step-up transformer 14 to a power system 30.

The power conversion system 13 is configured to include a power converter 5 and a power converter controller 6. The power converter 5 is configured to include a DC capacitor 31 disposed between a generator-side power converter 3 and a system-side power converter 4. The generator-side power converter 3 converts AC power of the generator 2 as a synchronous generator into DC power and the system-side power converter 4 converts DC power of the generator-side power converter 3 into AC power.

The generator-side power converter 3 and the system-side power converter 4 are subjected to striking control in response to a gate pulse signal transmitted from the power converter controller 6. In addition, an active power command value P_{ref} is transmitted to the power converter controller 6 from a wind turbine control board 15 as a high-order device thereof, and the power converter controller 6 determines the gate pulse signal depending on the active power command value P_{ref}. In Fig. 1, reference sign 12 represents a system voltage detector in the power converter 5, reference sign 16 represents a rotation speed detector of the generator, and reference sign 25 represents a high-speed shaft brake.

In the wind power generating equipment configured as described above, the wind turbine control board 15 obtains a rotation speed N_{FB} from the rotation speed detector 16 of the generator 2, generates the active power command value P_{ref}, and transmits the value to the power converter controller 6. Here, the active power command value P_{ref} is a value that is variable depending on the rotation speed N_{FB}; however, in the invention, since a focus on an attention is paid to an operation in a short time from reduction of the voltage due to an occurrence of a problem in the power system 30 to returning of the voltage with opening of a shut-off switch, the active power command value P_{ref} within this period may be considered to be constant in a relationship with the rotation speed N_{FB}. In the invention, as will be described below, the power converter controller 6 is controlled through an intentional change of the active power command value P_{ref} when the voltage reduction occurs by using signals F_{FRT} and P_{FB} generated by the power converter controller 6.

Next, an operation of the power converter controller 6 will be described. First, the power converter controller 6 detects and inputs a system voltage V_{FB} in the power conversion system 13 by the system voltage detector 12. The system voltage V_{FB} is output as a normalized value Vₚᵤ with a primary-side voltage of the step-up transformer 14 as a reference in a detection-voltage normalizing unit 7 in the power converter controller 6. Subsequently, a voltage-reduction-state determining unit 8 checks whether the normalized value Vₚᵤ is equal to or smaller than a predetermined threshold value, and outputs a signal F_{frt} that indicates a system voltage reduction state when the value is equal to or smaller than a predetermined threshold value. In this manner, the system-voltage-reduction state signal F_{frt} is "0" during a normal operation, and the system-voltage-reduction state signal F_{frt} is "1" when the system voltage reduction occurs.

The power converter controller 6 receives the active power command value P_{ref} transmitted from the wind turbine control board 15 and transmits the value as a power command value during the normal generation to an active-power calculating unit 10. At the same time, the active power command value P_{ref} is also input to an active-power-command-value storage unit 9, the active-power-command-value storage unit 9 saves and stores the active power command value P_{ref} and outputs an active power command value P_{ref_d} obtained before one sampling. The active-power-command-value storage unit 9 repeats such operations in a case where the system-voltage-reduction state signal F_{frt} is "0: when the system voltage is normal" and the active power command value P_{ref} is updated. However, when the system-voltage-reduction state signal F_{frt} is "1: the voltage reduction state", the active-power-command-value storage unit stops updating the active power command value P_{ref} and stores a final value obtained in the case where the system-voltage-reduction state signal F_{frt} is "0: when the system voltage is normal".

A multiplier 17 computes and outputs, as a product of the normalized value Vₚᵤ and the active power command value P_{ref_d} before one sampling, a value P_{ref_frt} (= P_{ref_d} × Vₚᵤ) depending on a reduction amount of the system voltage, as the active power command value when the system voltage reduction occurs. For example, in a case where a voltage is 0.3 at the time of sampling immediately after the system voltage reduction with respect to a voltage at the time of the sampling before the system voltage reduction, Vₚᵤ is 0.3 and the value P_{ref_frt} depending on the reduction amount of the system voltage is a value obtained by multiplying P_{ref_d} by 0.3.

The active-power-command-value calculating unit 10 determines an active power command value P_{ref1} in response to the system-voltage-reduction state signal F_{frt}. In the case where the system-voltage-reduction state signal F_{frt} is "0: when the system voltage is normal", P_{ref} is output. In addition, in the case where the system-voltage-reduction state signal F_{frt} is "1: the voltage reduction state", P_{ref_frt} is output.

A power/current control unit 11 calculates a gate pulse signal by using the active power command value output by the active-power-command-value calculating unit 10 and a detected current value I_{FB} and a detected voltage value V_{FB} which are detected by the generator-side power converter 3 and the system-side power converter 4 which are not illustrated, respectively, and drives the power converters of the generator-side power converter 3 and the system-side power converter 4. At the same time, the power/current control unit 11 calculates an active power detection value P_{FB} by using the detected current value I_{FB} and the detected voltage value V_{FB} and transmits the value to the wind turbine control board 15.

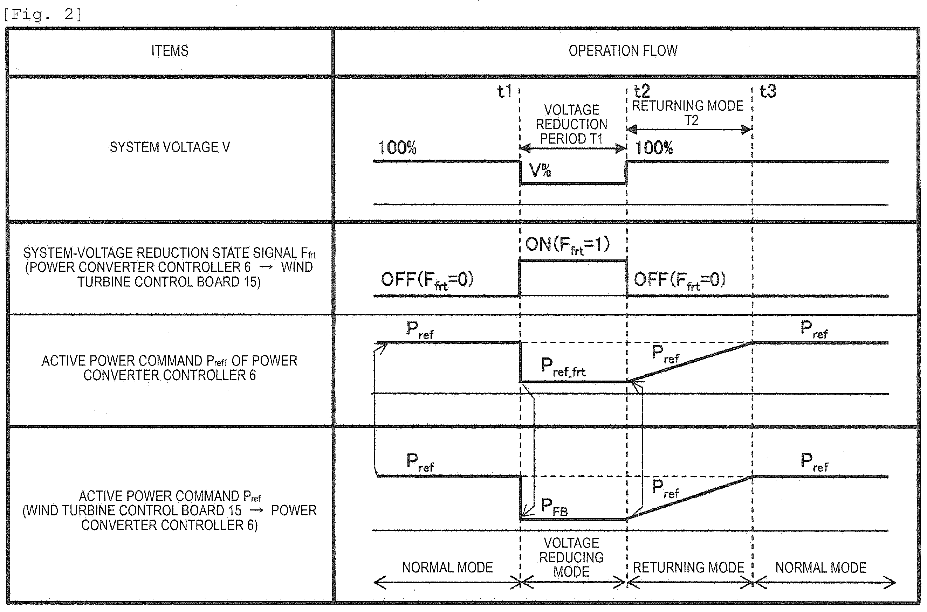

Fig. 2 illustrates temporal variations in the active power command value before and after the voltage reduction which is determined by the power converter controller 6. Fig. 2 illustrates a system voltage V, the system-voltage-reduction state signal F_{frt}, the active power command value P_{ref1} of the power converter controller 6, and the active power command value P_{ref} transmitted from the power converter controller 6, in this order from above.

In such a case, the system voltage V is 100% during the normal operation, the system voltage is instantaneously reduced due to system abnormality at a time point t1, and then the voltage returns to 100% of the voltage as a result of removal of a problem with the opening of the shut-off switch at a time point t2 after a voltage reduction period T1. At this time, the system-voltage-reduction state signal F_{frt} transmitted from the voltage-reduction-state determining unit 8 in Fig. 1 is "1" during the voltage reduction period T1 between the time points t1 and t2, and time zones before and after the period are "0". A state in which the system-voltage-reduction state signal F_{frt} transmitted from the voltage-reduction-state determining unit 8 is ON (F_{frt} = 1) is set to a voltage reducing mode and T1 represents this period.

In this voltage reduction state, the active power command value P_{ref1} transmitted from the active-power-command-value calculating unit 10 is P_{ref_frt} generated in the multiplier 17. In other words, an active power command value obtained by reflecting the state of the voltage reduction is set. For example, when the voltage is reduced to 30% of the normal operation, P_{ref_frt} corresponding to 30% thereof, which is transmitted from the multiplier 17, is transmitted to the power converter 5 via the power/current control unit 11, as the active power command value P_{ref1} transmitted from the active-power-command-value calculating unit 10. In this manner, the power converter controller 6 controls the power with the active power command value P_{ref_frt} independently computed in the power converter controller 6 without using the active power command value P_{ref} from the wind turbine control board 15. The active power value P_{FB} controlled by using the active power command value P_{ref_frt} is transmitted to the wind turbine control board 15, and the wind turbine control board 15 uses the P_{FB} as the active power command value as described by active power command value P_{ref}.

According to such a configuration described above, the power conversion system 13 computes the active power command value depending on the reduction amount of the system voltage independently in the power converter controller 6 in the wind power generating equipment, without using the active power command value from the wind turbine control board 15 as a high-order system of the power conversion system 13, thus is capable of controlling the power of the wind power generating equipment in a highly responsive manner by controlling the power depending on the computed active power command value, and is capable of stably continuing an operation of a wind power generating system when system abnormality occurs.

Then, after the returning of the system voltage V at the time point t2, the system-voltage-reduction state signal F_{frt} is OFF (F_{frt} = 0) as illustrated in Fig. 2, the power conversion system 5 controls the power, depending on the value of the active power command value P_{ref} transmitted from the wind turbine control board 15.

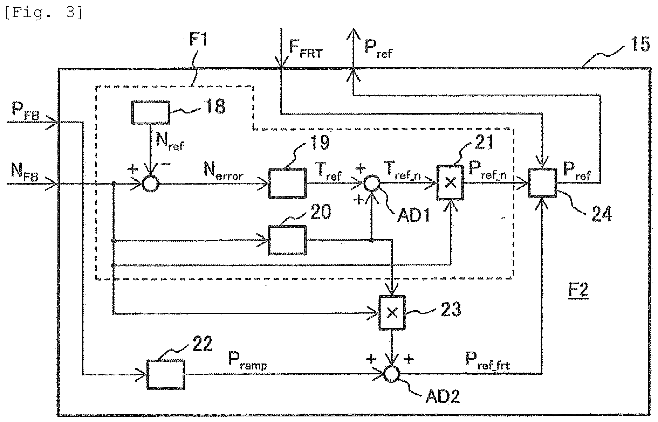

However, immediately after the returning of the system voltage, since an active voltage of the wind power generator 2 decreases to a value depending on the reduction amount of the voltage, a state (returning mode) of returning to the active voltage occurs. An operation of the returning mode is described with reference to Fig. 3 illustrating a detailed configuration of the wind turbine control board 15 that outputs the power command value P_{ref} controlled by the power conversion system. In Fig. 2, a period of the returning mode is illustrated as a period T2 from the time point t2 to t3.

Fig. 3 is a diagram illustrating a circuit configuration of the wind turbine control board 15. To be broad, functions of the wind turbine control board 15 illustrated in Fig. 3 largely include a function F1 of determining the active power command value P_{ref} during the normal operation, and a function F2 of determining the active power command value P_{ref} in the returning mode.

First, the function F1 of determining the active power command value P_{ref} during the normal operation is described. The wind turbine control board 15 receives the rotation speed N_{FB} of the generator 2 which is detected by the rotation speed detector 16 and calculates deviation Nₑᵣᵣₒᵣ of N_{ref} that is output from the rotation speed command computing device 18. A PI controller 19 computes a reference torque command value T_{ref} by using the calculated deviation Nₑᵣᵣₒᵣ. In addition, a vibration component is derived from the rotation speed N_{FB} of the generator 2, a drive-train-vibration reducing controller 20, which calculates a torque command value that reduces the vibration component, computes a driver-train-vibration reducing torque command value, adds the computed value to the reference torque command value T_{ref} obtained by the PI controller 19 in an adder AD1, and calculates a torque command value T_{ref_n} during the normal operation. The multiplier 21 multiplies the torque command value T_{ref_n} during the normal operation and N_{FB}, and calculates the active power command value P_{ref_n} during a normal operation.

To describe very briefly, the function F1 of determining the active power command value P_{ref} during the normal operation is to determine a target value of an electric output corresponding to a machine input to a wind turbine. Thus, at this time, a vibration reducing component of a drive train can be described as a signal added to the target value of the electric output.

By comparison, the function F2 of determining the active power command value P_{ref} in the returning mode is the rest part other than the function F1 of determining the active power command value P_{ref} during the normal operation from the functions of the wind turbine control board 15.

By the function F2 of determining the active power command value P_{ref} in the returning mode, a returning-mode active-power-command-value computing unit 22 stores the active power command value P_{FB} received from the power converter controller 6 when the system voltage reduction (F_{frt} = 1) occurs. Next, the returning-mode active-power-command-value computing unit 22 outputs an active power command value Pᵣₐₘₚ increasing at any rate in a ramp shape with P_{FB} after the returning of the system voltage (F_{frt} = 0) as an initial value.

On the other hand, a multiplier 23 multiplies the driver-train-vibration reducing torque command value computed by the drive-train-vibration reducing controller 20 and the generator rotation speed N_{FB}. The active power command value Pᵣₐₘₚ increasing in the ramp shape and the multiplied value by the multiplier 23 are added in an adder AD2, and the active power command value P_{ref_frt} is calculated in the returning mode.

In addition, an active-power-command calculating unit 24 performs a change in a value of a signal of the system-voltage-reduction state signal F_{frt} and comparison of magnitudes of P_{ref_n} and P_{ref_frt}, calculates the active power command value P_{ref}, outputs P_{ref_n} as the active power command value P_{ref} during the normal operation, and outputs P_{ref_frt} as the active power command value P_{ref} in the returning mode. Since P_{ref_frt} is the active power command value obtained by adding a value obtained by multiplying the driver-train-vibration reducing torque command value and the generator rotation speed N_{FB} in the multiplier 23, it is possible to reduce variations in the generator rotation speed in the returning mode, similarly to a normal mode.

In such a configuration according to the invention, after the returning from the voltage reduction state, the power is controlled, depending on an active power command value incorporated in drive train vibration reducing control, and thereby it is possible to reduce the variations in the generator rotation speed, and it is possible to stably continue the operation of the wind power generating system even after the system returning.

In addition, according to the invention, even in a case of either of the voltage reduction mode during the system abnormality or the returning mode, it is possible to reduce the variations in the generator rotation speed with the power control in the power converter controller 6 and the drive-train-vibration reducing control by the wind turbine control board 15, without an operation of the high-speed shaft brake 25 illustrated in Fig. 1.

Since the high-speed shaft brake 25 operates after receiving an operation command signal from the wind turbine control board 15, mechanical time-constant delay (hundreds of ms) occurs. When the operation is performed during a phenomenon in which instantaneous voltage reduction obtained when the system abnormality occurs is at about minimum 100 ms, the variations in the generator rotation speed is reduced through power control, the generator rotation speed has a value smaller than a predetermined value, and unstable variations in the rotation speed occurs.

Therefore, in the configuration of this Example in which the high-speed shaft brake does not operate when the system voltage reduction occurs and after the returning, it is possible to reduce the variations in the generator rotation speed when the system voltage reduction occurs and after the returning, and it is possible to stably continue the operation of the wind power generating system even after the returning of the system.

### [Example 2]

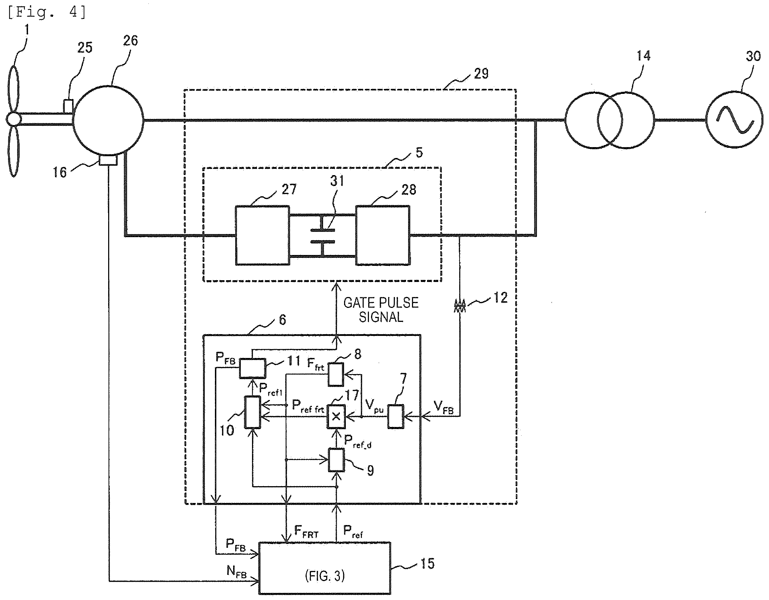

Next, differences of Example 2 from Example 1 of the invention will be mainly described. In Example 1, the generator 2 is the synchronous generator, and the power conversion system 5 has a configuration of a full converter; however, the generator 2 is a secondary excitation winding induction generator, and the power conversion system 5 is a secondary excitation type power conversion system as illustrated in Fig. 4 in Example 2.

In Example 2, in order to control a frequency and a magnitude of an excitation current applied to a rotor of the secondary excitation winding induction generator 26, the power conversion system 5 is replaced with a secondary excitation type power conversion system 29 and is configured to include a rotor-side power converter 27 that converts AC power of a rotor into DC power and a system-side power converter 28 that converts DC power of the rotor-side power converter into AC power. Also in Example 2, in the power converter 5 similar to Example 1, the gate pulse signal is output from the power converter controller 6, and the rotor-side power converter 27 and the system-side power converter 28 are driven.

As described above, in Example 1, in the configuration in which the generator is the synchronous generator, and the power conversion system is a full converter, effects of the invention are achieved; however, as described in Example 2, in the configuration in which the generator is a secondary excitation winding induction generator, and the power conversion system is a secondary excitation type power conversion system, it is also possible to achieve the same effects as those in Example 1.

As described above, the wind power generating equipment described in Examples 1 and 2 forms a so-called wind farm in which a plurality of units of equipment are installed in the same site in many cases. In this case, an aspect of installation of the power conversion system for each generator, individually, and an aspect of common installation of the power conversion system with respect to a plurality of generators are considered; however, the invention is applicable to any case.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

### Reference Signs List

1: blade
2: generator
3: generator-side power converter
4: system-side power converter
5: power converter
6: power converter controller
7: detection-voltage normalizing unit
8: voltage-reduction-state determining unit
9: active-power-command-value storage unit
10: active-power-command-value calculating unit
11: power/current control unit
12: system voltage detector
13: power conversion system
14: step-up transformer
15: wind turbine control board
16: rotation speed detector
17: multiplier
18: rotation speed command computing device
19: PI controller
20: drive-train-vibration reducing controller
21: multiplier
22: system-voltage-returning-mode active-power-command-value computing unit
23: multiplier
24: active-power-command calculating unit
25: high-speed shaft brake
26: generator
27: rotor-side power converter
28: system-side power converter
29: secondary excitation type power conversion system

## Claims

1. Wind power generating equipment comprising:
a generator (2) that is driven by a blade (1) which rotates by receiving the wind;
a power converter (5) configured to convert an electric output of the generator (2) such that the output is interconnected with an electric power system;
a power converter controller (6) configured to control
the power converter (5);
a wind turbine control board (15) configured to transmit an active power command value to an active-power calculating unit (10), which outputs a command value of the electric output which is transmitted from the power converter (5), and to an active-power-command-value storage unit (9) of the power converter controller (6),
**characterized in that** the active-power calculating unit (10) is configured to output the active power command value transmitted from the wind turbine control board (15) as said command value of the electric output during a normal operation state when a system voltage is normal, and
the power converter controller (6) is configured to control the electric output of the power converter (5) in response to an active power command value that depends on a reduction amount of a system voltage during a voltage reduction state when instantaneous reduction occurs in the system voltage interconnected with the wind power generating equipment, wherein the active-power calculating unit (10) is configured to output the active power command value that depends on a reduction amount of a system voltage as said command value of the electric output during the voltage reduction state,
wherein the active-power-command-value storage unit (9) is configured to save and store the active power command value received from the wind turbine control board (15) and to output an active power command value obtained before one sampling, and, during the normal operation state, the active-power-command-value storage unit (9) is configured to update the active power command value by repeating saving, storing and outputting of the active power command value, and,
during the voltage reduction state, the active-power-command-value storage unit (9) is configured to stop updating the active power command value and to store a final value obtained when the system voltage was in normal operation state, and a multiplier (17) of the power converter controller (6) is configured to compute and output to the active-power calculating unit (10) the active power command value that depends on a reduction amount of a system voltage which is a product of a normalized system voltage value and the active power command value before one sampling received from the active-power-command-value storage unit (9).

2. The wind power generating equipment according to claim 1,
wherein the wind turbine control board (15) is configured to transmit, to the power converter controller (6), the active power command value corresponding to a machine input from the generator (2) at normal times and controls the electric output of the power converter (5) via the power converter controller (6), and the active power command value contains a variation reducing component that reduces variations in a rotation speed of the generator (2).

3. The wind power generating equipment according to any one of claims 1 to 2,
wherein the wind turbine control board (15) is configured to transmit, to the power converter controller (6), the active power command value that increases with the elapse of time when the system voltage returns after the instantaneous reduction in the system voltage interconnected with the wind power generating equipment and controls the electric output of the power converter (5) via the power converter controller (6), and the active power command value contains a variation reducing component that reduces variations in a rotation speed of the generator (2).

4. The wind power generating equipment according to any one of claims 1 to 3,
wherein the power converter (5) is configured to include a generator-side power converter (3) that converts AC power of the generator (2) as a synchronous generator into DC power, a DC capacitor, and a system-side power converter (28) that converts DC power of the generator-side power converter (3) into AC power.

5. The wind power generating equipment according to any one of claims 1 to 4,
wherein the power converter (5) is configured to include a rotor-side power converter (27) that converts AC power of a rotor of the generator (2) as a secondary excitation winding induction generator (2) into DC power, a DC capacitor, and a system-side power converter (28) that converts DC power of the rotor-side power converter (27) into AC power.

6. An operation method of a wind power generating equipment according to any one of claims 1 to 5, the method **characterized by** comprising:
- transmitting from the wind turbine control board (15) an active power command value to the active-power calculating unit (10) and to the active-power-command-value storage unit (9) of the power converter controller (6), and outputting from the active-power calculating unit (10) a command value of the electric output which is transmitted from the power converter (5),
- outputting from the active-power calculating unit (10) the active power command value transmitted from the wind turbine control board (15) as said command value of the electric output during a normal operation state when a system voltage is normal, and
- controlling by the power converter controller (6) the electric output of the power converter (5) in response to an active power command value that depends on a reduction amount of a system voltage during a voltage reduction state when instantaneous reduction occurs in the system voltage interconnected with the wind power generating equipment, wherein the active-power calculating unit (10) outputs the active power command value that depends on a reduction amount of a system voltage as said command value of the electric output during the voltage reduction state,
wherein the active-power-command-value storage unit (9) saves and stores the active power command value received from the wind turbine control board (15) and outputs an active power command value obtained before one sampling, and, during the normal operation state, the active-power-command-value storage unit (9) updates the active power command value by repeating saving, storing and outputting of the active power command value, and,
during the voltage reduction state, the active-power-command-value storage unit (9) stops updating the active power command value and stores a final value obtained when the system voltage was in normal operation state, and a multiplier (17) of the power converter controller (6) computes and outputs to the active-power calculating unit (10) the active power command value that depends on a reduction amount of a system voltage which is a product of a normalized system voltage value and the active power command value before one sampling received from the active-power-command-value storage unit (9).

7. The operation method of wind power generating equipment according to claim 6, further comprising:
controlling the electric output of the power converter (5) by using the active power command value corresponding to a machine input from the generator (2) when a system that is interconnected with the wind power generating equipment normally operates, the active power command value containing a variation reducing component that reduces variations in a rotation speed of the generator (2).

8. The operation method of wind power generating equipment according to claim 6 or 7, further comprising:
transmitting, to the power converter controller (6), the active power command value that increases with the elapse of time when the system voltage returns after the instantaneous reduction in the system voltage interconnected with the wind power generating equipment, the active power command value containing a variation reducing component that reduces variations in a rotation speed of the generator (2).

9. A wind farm comprising:
a plurality of units of the wind power generating equipment according to any one of claims 1 to 5;
a plurality of generators (2) that are driven by a blade (1) which rotates by receiving the wind;
and one or a plurality of power converters (5) configured to convert an electric output of the generator (2) such that the output is interconnected with an electric power system.

## Patentansprüche

1. Windkrafterzeugungsanlage, die Folgendes umfasst:
einen Generator (2), der durch ein Rotorblatt (1) angetrieben wird, das sich dreht, indem es den Wind aufnimmt;
einen Leistungsumsetzer (5), der konfiguriert ist, eine elektrische Leistung des Generators (2) derart umzusetzen, dass die Leistung mit einem Stromversorgungssystem verbunden ist;
eine Leistungsumsetzersteuereinheit (6), die konfiguriert ist, den Leistungsumsetzer (5) zu steuern;
eine Windkraftanlagensteuerplatine (15), die konfiguriert ist, einen Wirkleistungsanweisungswert zu einer Wirkleistungsberechnungseinheit (10), die einen Anweisungswert der elektrischen Leistung, der vom Leistungsumsetzer (5) gesendet wird, ausgibt, und zu einer Wirkleistungsanweisungswertspeichereinheit (9) der Leistungsumsetzersteuereinheit (6) zu senden,
**dadurch gekennzeichnet, dass** die Wirkleistungsberechnungseinheit (10) konfiguriert ist, den Wirkleistungsanweisungswert, der von der Windkraftanlagensteuerplatine (15) gesendet wird, als den Anweisungswert der elektrischen Leistung während eines normalen Betriebszustands, während eine Systemspannung normal ist, auszugeben, und
die Leistungsumsetzersteuereinheit (6) konfiguriert ist, die elektrische Leistung des Leistungsumsetzers (5) als Antwort auf einen Wirkleistungsanweisungswert, der von einer Verringerungsmenge einer Systemspannung während eines Spannungsverringerungszustands abhängt, zu steuern, wenn eine unmittelbare Verringerung der Systemspannung, die mit der Windkrafterzeugungsanlage verbunden ist, auftritt, wobei die Wirkleistungsberechnungseinheit (10) konfiguriert ist, den Wirkleistungsanweisungswert, der von einer Verringerungsmenge einer Systemspannung abhängt, als den Anweisungswert der elektrischen Leistung während des Spannungsverringerungszustands auszugeben, wobei
die Wirkleistungsanweisungswertspeichereinheit (9) konfiguriert ist, den Wirkleistungsanweisungswert, der von der Windkraftanlagensteuerplatine (15) empfangen wurde, zu speichern und aufzubewahren und einen Wirkleistungsanweisungswert, der eine Probenentnahme zuvor erhalten wurde, auszugeben, und die Wirkleistungsanweisungswertspeichereinheit (9) konfiguriert ist, während des normalen Betriebszustands den Wirkleistungsanweisungswert durch Wiederholen des Speicherns, Aufbewahrens und Ausgebens des Wirkleistungsanweisungswerts zu aktualisieren, und
die Wirkleistungsanweisungswertspeichereinheit (9) konfiguriert ist, während des Spannungsverringerungszustands das Aktualisieren des Wirkleistungsanweisungswerts anzuhalten und einen letzten Wert, der erhalten wurde, während die Systemspannung sich in einem normalen Betriebszustand befand, aufzubewahren, und ein Vervielfacher (17) der Leistungsumsetzersteuereinheit (6) konfiguriert ist, den Wirkleistungsanweisungswert zu berechnen und zur Wirkleistungsberechnungseinheit (10) auszugeben, der von einer Verringerungsmenge einer Systemspannung, die ein Produkt aus einem normierten Systemspannungswert und dem Wirkleistungsanweisungswert eine Probenentnahme zuvor, der von der Wirkleistungsanweisungswertspeichereinheit (9) empfangen wurde, ist, abhängt.

2. Windkrafterzeugungsanlage nach Anspruch 1, wobei
die Windkraftanlagensteuerplatine (15) konfiguriert ist, den Wirkleistungsanweisungswert, der einer maschinellen Eingabe vom Generator (2) entspricht, zu normalen Zeiten zur Leistungsumsetzersteuereinheit (6) zu senden und die elektrische Leistung des Leistungsumsetzers (5) mittels der Leistungsumsetzersteuereinheit (6) steuert, und der Wirkleistungsanweisungswert eine Schwankungsverringerungskomponente enthält, die Schwankungen einer Drehzahl des Generators (2) verringert.

3. Windkrafterzeugungsanlage nach einem der Ansprüche 1 bis 2, wobei
die Windkraftanlagensteuerplatine (15) konfiguriert ist, den Wirkleistungsanweisungswert, der mit der verstrichenen Zeit ansteigt, zur Leistungsumsetzersteuereinheit (6) zu senden, wenn die Systemspannung nach der unmittelbaren Verringerung der Systemspannung, die mit der Windkrafterzeugungsanlage verbunden ist, zurückkehrt, und die elektrische Leistung des Leistungsumsetzers (5) mittels der Leistungsumsetzersteuereinheit (6) steuert, und der Wirkleistungsanweisungswert eine Schwankungsverringerungskomponente enthält, die Schwankungen einer Drehzahl des Generators (2) verringert.

4. Windkrafterzeugungsanlage nach einem der Ansprüche 1 bis 3, wobei
der Leistungsumsetzer (5) konfiguriert ist, einen generatorseitigen Leistungsumsetzer (3), der eine Wechselstromleistung des Generators (2) als ein Synchrongenerator in eine Gleichstromleistung umsetzt, einen Gleichstromkondensator und einen systemseitigen Leistungsumsetzer (28), der eine Gleichstromleistung des generatorseitigen Leistungsumsetzers (3) in eine Wechselstromleistung umsetzt, zu enthalten.

5. Windkrafterzeugungsanlage nach einem der Ansprüche 1 bis 4, wobei
der Leistungsumsetzer (5) konfiguriert ist, einen rotorseitigen Leistungsumsetzer (27), der eine Wechselstromleistung eines Rotors des Generators (2) als ein Sekundärerregungswicklungsinduktionsgenerator (2) in eine Gleichstromleistung umsetzt, einen Gleichstromkondensator und einen systemseitigen Leistungsumsetzer (28), der eine Gleichstromleistung des rotorseitigen Leistungsumsetzers (27) in eine Wechselstromleistung umsetzt, zu enthalten.

6. Betriebsverfahren einer Windkrafterzeugungsanlage nach einem der Ansprüche 1 bis 5, wobei das Verfahren **gekennzeichnet ist durch**:
- Senden von der Windkraftanlagensteuerplatine (15) eines Wirkleistungsanweisungswerts zur Wirkleistungsberechnungseinheit (10) und zur Wirkleistungsanweisungswertspeichereinheit (9) der Leistungsumsetzersteuereinheit (6) und Ausgeben von der Wirkleistungsberechnungseinheit (10) eines Anweisungswerts der elektrischen Leistung, der vom Leistungsumsetzer (5) gesendet wird,
- Ausgeben von der Wirkleistungsberechnungseinheit (10) des Wirkleistungsanweisungswerts, der von der Windkraftanlagensteuerplatine (15) gesendet wird, als den Anweisungswert der elektrischen Leistung während eines normalen Betriebszustands, während eine Systemspannung normal ist, und
- Steuern **durch** die Leistungsumsetzersteuereinheit (6) der elektrischen Leistung des Leistungsumsetzers (5) als Antwort auf einen Wirkleistungsanweisungswert, der von einer Verringerungsmenge einer Systemspannung während eines Spannungsverringerungszustands abhängt, wenn eine unmittelbare Verringerung der Systemspannung, die mit der Windkrafterzeugungsanlage verbunden ist, auftritt, wobei die Wirkleistungsberechnungseinheit (10) den Wirkleistungsanweisungswert, der von einer Verringerungsmenge einer Systemspannung abhängt, als den Anweisungswert der elektrischen Leistung während des Spannungsverringerungszustands ausgibt, wobei
die Wirkleistungsanweisungswertspeichereinheit (9) den Wirkleistungsanweisungswert, der von der Windkraftanlagensteuerplatine (15) empfangen wurde, speichert und aufbewahrt und einen Wirkleistungsanweisungswert, der eine Probenentnahme zuvor erhalten wurde, ausgibt, und die Wirkleistungsanweisungswertspeichereinheit (9) während des normalen Betriebszustands den Wirkleistungsanweisungswert **durch** Wiederholen des Speicherns, Aufbewahrens und Ausgebens des Wirkleistungsanweisungswerts aktualisiert, und
die Wirkleistungsanweisungswertspeichereinheit (9) während des Spannungsverringerungszustands das Aktualisieren des Wirkleistungsanweisungswerts anhält und einen letzten Wert, der erhalten wurde, während die Systemspannung sich in einem normalen Betriebszustand befand, aufbewahrt, und ein Vervielfacher (17) der Leistungsumsetzersteuereinheit (6) den Wirkleistungsanweisungswert berechnet und zur Wirkleistungsberechnungseinheit (10) ausgibt, der von einer Verringerungsmenge einer Systemspannung, die ein Produkt aus einem normierten Systemspannungswert und dem Wirkleistungsanweisungswert eine Probenentnahme zuvor, der von der Wirkleistungsanweisungswertspeichereinheit (9) empfangen wurde, ist, abhängt.

7. Betriebsverfahren für Windkrafterzeugungsanlagen nach Anspruch 6, das ferner Folgendes umfasst:
Steuern der elektrischen Leistung des Leistungsumsetzers (5) unter Verwendung des Wirkleistungsanweisungswerts, der einer maschinellen Eingabe vom Generator (2) entspricht, wenn ein System, das mit der Windkrafterzeugungsanlage verbunden ist, normal arbeitet, wobei der Wirkleistungsanweisungswert eine Schwankungsverringerungskomponente enthält, die Schwankungen einer Drehzahl des Generators (2) verringert.

8. Betriebsverfahren für Windkrafterzeugungsanlagen nach Anspruch 6 oder 7, das ferner Folgendes umfasst:
Senden zur Leistungsumsetzersteuereinheit (6) des Wirkleistungsanweisungswerts, der mit der verstrichenen Zeit ansteigt, wenn die Systemspannung nach der unmittelbaren Verringerung der Systemspannung, die mit der Windkrafterzeugungsanlage verbunden ist, zurückkehrt, wobei der Wirkleistungsanweisungswert eine Schwankungsverringerungskomponente enthält, die Schwankungen einer Drehzahl des Generators (2) verringert.

9. Windpark, der Folgendes umfasst:
mehrere Einheiten der Windkrafterzeugungsanlage nach einem der Ansprüche 1 bis 5;
mehrere Generatoren (2), die durch ein Rotorblatt (1) angetrieben werden, das sich dreht, indem es den Wind aufnimmt; und
einen oder mehrere Leistungsumsetzer (5), die konfiguriert sind, eine elektrische Leistung des Generators (2) derart umzusetzen, dass die Leistung mit einem Stromversorgungssystem verbunden ist.

## Revendications

1. Équipement de génération d'énergie éolienne comprenant :
un générateur (2) entraîné par une pale (1) qui est mise en rotation quand elle reçoit du vent ;
un convertisseur de puissance (5) configuré pour convertir une sortie électrique du générateur (2) de sorte que la sortie est interconnectée avec un système de puissance électrique ;
un contrôleur de convertisseur de puissance (6) configuré pour commander le convertisseur de puissance (5) ;
un tableau de commande de turbine éolienne (15) configuré pour transmettre une valeur d'ordre de puissance active vers une unité de calcul de puissance active (10), qui sort une valeur d'ordre de la sortie électrique qui est transmise depuis le convertisseur de puissance (5), et vers une unité de stockage de valeur d'ordre de puissance active (9) du contrôleur de convertisseur de puissance (6),
**caractérisé en ce que** l'unité de calcul de puissance active (10) est configurée pour sortir la valeur d'ordre de puissance active transmise depuis le tableau de commande de turbine éolienne (15) comme ladite valeur d'ordre de la sortie électrique pendant un état de fonctionnement normal quand une tension de système est normale, et
le contrôleur de convertisseur de puissance (6) est configuré pour commander la sortie électrique du convertisseur de puissance (5) en réponse à une valeur d'ordre de puissance active qui dépend d'une amplitude de réduction d'une tension de système pendant un état de réduction de tension quand une réduction instantanée survient dans la tension de système interconnectée avec l'équipement de génération de puissance éolienne, dans lequel l'unité de calcul de puissance active (10) est configurée pour sortir la valeur d'ordre de puissance active qui dépend d'une amplitude de réduction d'une tension de système comme ladite valeur d'ordre de la sortie électrique pendant l'état de réduction de tension,
dans lequel l'unité de stockage de valeur d'ordre de puissance active (9) est configurée pour sauvegarder et stocker la valeur d'ordre de puissance active reçue depuis le tableau de commande de turbine éolienne (15) et pour sortir une valeur d'ordre de puissance active obtenue avant un échantillonnage, et, pendant l'état de fonctionnement normal, l'unité de stockage de valeur d'ordre de puissance active (9) est configurée pour mettre à jour la valeur d'ordre de puissance active en répétant la sauvegarde, le stockage et la -sortie de la valeur d'ordre de puissance active, et,
pendant l'état de réduction de tension, l'unité de stockage de valeur d'ordre puissance active (9) est configurée pour arrêter la mise à jour de la valeur d'ordre de puissance active et pour stocker une valeur finale obtenue quand la tension de système était dans un état de fonctionnement normal, et un multiplicateur (17) du contrôleur de convertisseur de puissance (6) est configuré pour calculer et sortir vers l'unité de calcul de puissance active (10) la valeur d'ordre de puissance active qui dépend d'une amplitude de réduction d'une tension de système qui est un produit d'une valeur de tension de système normalisée et de la valeur d'ordre de puissance active avant un échantillonnage reçu depuis l'unité de stockage de valeur d'ordre de puissance active (9).

2. Équipement de génération d'énergie éolienne selon la revendication 1, dans lequel le tableau de commande de turbine éolienne (15) est configuré pour transmettre vers le contrôleur de convertisseur de puissance (6) la valeur d'ordre de puissance active correspondant à une entrée de machine depuis le générateur (2) à des temps normaux et pour commander la sortie électrique du convertisseur de puissance (5) via le contrôleur de convertisseur de puissance (6), et la valeur d'ordre de puissance active contient un composant de réduction de variation qui réduit les variations dans une vitesse de rotation du générateur (2).

3. Équipement de génération d'énergie éolienne selon l'une quelconque des revendications 1 à 2,
dans lequel le tableau de commande de turbine éolienne (15) est configuré pour transmettre vers le contrôleur de convertisseur de puissance (6) la valeur d'ordre de puissance active qui augmente avec l'écoulement du temps quand la tension de système est rétablie après la réduction instantanée dans la tension de système interconnectée avec l'équipement de génération d'énergie éolienne, et pour commander la sortie électrique du convertisseur de puissance (5) via le contrôleur de convertisseur de puissance (6), et la valeur d'ordre de puissance active contient un composant de réduction de variation qui réduit les variations dans une vitesse de rotation du générateur (2).

4. Équipement de génération d'énergie éolienne selon l'une quelconque des revendications 1 à 3,
dans lequel le convertisseur de puissance (5) est configuré pour inclure un convertisseur de puissance côté générateur (3) qui convertit une puissance en courant alternatif (CA) du générateur (2) à titre de générateur synchrone en une puissance en courant continu (CC), un condensateur CC, et un convertisseur de puissance côté système (28) qui convertit une puissance CC du convertisseur de puissance côté générateur (3) en puissance CA.

5. Équipement de génération d'énergie éolienne selon l'une quelconque des revendications 1 à 4,
dans lequel le convertisseur de puissance (5) est configuré pour inclure un convertisseur de puissance côté rotor (27) qui convertit une puissance CA d'un rotor du générateur (2) à titre de générateur à induction à enroulement d'excitation secondaire (2) en une puissance CC, un condensateur CC et un convertisseur de puissance côté système (28) qui convertit une puissance CC du convertisseur de puissance côté rotor (27) en puissance CA.

6. Procédé de fonctionnement d'un équipement de génération d'énergie éolienne selon l'une quelconque des revendications 1 à 5, le procédé étant **caractérisé en ce qu'**il comprend les étapes consistant à :
- transmettre depuis le tableau de commande de turbine éolienne (15) une valeur d'ordre de puissance active vers l'unité de calcul de puissance active (10) et vers l'unité de stockage de valeur d'ordre de puissance active (9) du contrôleur de convertisseur de puissance (6), et sortir depuis l'unité de calcul de puissance active (10) une valeur d'ordre de la sortie électrique qui est transmise depuis le convertisseur de puissance (5),
- sortir depuis l'unité de calcul de puissance active (10) la valeur d'ordre de puissance active transmise depuis le tableau de commande de turbine éolienne (15) comme ladite valeur d'ordre de la sortie électrique pendant un état de fonctionnement normal quand une tension de système est normale, et
- commander par le contrôleur de convertisseur de puissance (6) la sortie électrique du convertisseur de puissance (5) en réponse à une valeur d'ordre de puissance active qui dépend d'une amplitude de réduction d'une tension de système pendant un état de réduction de tension quand une réduction instantanée survient dans la tension de système interconnectée avec l'équipement de génération de puissance éolienne, dans lequel l'unité de calcul de puissance active (10) sort la valeur d'ordre de puissance active qui dépend d'une amplitude de réduction d'une tension de système comme ladite valeur d'ordre de la sortie électrique pendant l'état de réduction de tension,
dans lequel l'unité de stockage de valeur d'ordre de puissance active (9) sauvegarde et stocke la valeur d'ordre de puissance active reçue depuis le tableau de commande de turbine éolienne (15) et sort une valeur d'ordre de puissance active obtenue avant un échantillonnage, et, pendant l'état de fonctionnement normal, l'unité de stockage de valeur d'ordre de puissance active (9) met à jour la valeur d'ordre de puissance active en répétant la sauvegarde, le stockage et la sortie de la valeur d'ordre de puissance active, et,
pendant l'état de réduction de tension, l'unité de stockage de valeur d'ordre de puissance active (9) arrête la mise à jour de la valeur d'ordre de puissance active et stocke une valeur finale obtenue quand la tension de système était dans un état de fonctionnement normal, et un multiplicateur (17) du contrôleur de convertisseur de puissance (6) calcule et sort vers l'unité de calcul de puissance active (10) la valeur d'ordre de puissance active qui dépend d'une amplitude de réduction d'une tension de système qui est un produit d'une valeur de tension de système normalisée et de la valeur d'ordre de puissance active avant un échantillonnage reçu depuis l'unité de stockage de valeur d'ordre de puissance active (9).

7. Procédé de fonctionnement d'un équipement de génération d'énergie éolienne selon la revendication 6, comprenant en outre l'étape consistant à :
commander la sortie électrique du convertisseur de puissance (5) en utilisant la valeur d'ordre de puissance active correspondant à une entrée de machine depuis le générateur (2) quand un système qui est interconnecté avec l'équipement de génération d'énergie éolienne fonctionne normalement, la valeur d'ordre de puissance active contenant un composant de réduction de variation qui réduit les variations dans une vitesse de rotation du générateur (2).

8. Procédé de fonctionnement d'un équipement de génération d'énergie éolienne selon la revendication 6 ou 7, comprenant en outre l'étape consistant à :
transmettre vers le contrôleur de convertisseur de puissance (6) la valeur d'ordre de puissance active qui augmente avec l'écoulement du temps quand la tension de système est rétablie après la réduction instantanée dans la tension de système interconnectée avec l'équipement de génération d'énergie éolienne, la valeur d'ordre de puissance active contenant un composant de réduction de variation qui réduit les variations dans une vitesse de rotation du générateur (2).

9. Parc éolien comprenant :
une pluralité d'unités d'équipement de génération d'énergie éolienne selon l'une quelconque des revendications 1 à 5 ;
une pluralité de générateurs (2) qui sont entraînés par une pale (1) qui est mise en rotation quand elle reçoit du vent ;
et un ou plusieurs convertisseurs de puissance (5) configuré(s) pour convertir une sortie électrique du générateur (2) de sorte que la sortie est interconnectée avec un système de puissance électrique.
